(19) Europäisches Patentamt
European Patent Office
Office européen des brevets

(11) **EP 3 686 172 A1**

(12) **EUROPÄISCHE PATENTANMELDUNG**

(43) Veröffentlichungstag:
**29.07.2020  Patentblatt 2020/31**

(51) Int Cl.:
***C04B 26/06*** *(2006.01)*

(21) Anmeldenummer: **20158528.8**

(22) Anmeldetag: **08.05.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(62) Dokumentnummer(n) der früheren Anmeldung(en) nach Art. 76 EPÜ:
**15723003.8 / 3 294 682**

(71) Anmelder: **STO SE & Co. KGaA**
**79780 Stühlingen (DE)**

(72) Erfinder:
 • **Weier, Andreas**
  **78647 Trossingen (DE)**
 • **Schaller, Christian**
  **73765 Neuhausen (DE)**
 • **Weh, Walter**
  **78647 Trossingen (DE)**

 • **Gerlach, Günter**
  **78183 Hüfingen (DE)**
 • **Burgeth, Gerald**
  **79805 Eggingen (DE)**
 • **Graunke, Volker**
  **79879 Wutach (DE)**

(74) Vertreter: **Gottschalk, Matthias**
**Gottschalk Maiwald**
**Patentanwalts- und Rechtsanwalts- (Schweiz)**
**GmbH**
**Splügenstrasse 8**
**8002 Zürich (CH)**

Bemerkungen:
Diese Anmeldung ist am 20-02-2020 als Teilanmeldung zu der unter INID-Code 62 erwähnten Anmeldung eingereicht worden.

(54)  **ZUSAMMENSETZUNG ZUR OBERFLÄCHENBEHANDLUNG**

(57)  Die vorliegende Erfindung ist gerichtet auch eine Zusammensetzung enthaltend
- ein silikonfreies Wachs (W)
- ein Bindemittel (B)
- ein oder mehrere Pigment(e) und/oder Füllstoff(e) (PF1) aufweisend eine mittlere Teilchengröße von 0,1 bis 1,0 μm in einer Gesamtmenge von 8,0 bis 55 Gew.%;
- ein oder mehrere Pigment(e) und/oder Füllstoff(e) (PF2) aufweisend eine mittlere Teilchengröße von größer als 1,0 bis 10 μm in einer Gesamtmenge von 5,0 bis 40 Gew.%;
- ein oder mehrere Pigment(e) und/oder Füllstoff(e) (PF3) aufweisend eine mittlere Teilchengröße von größer als 10 bis 40 μm in einer Gesamtmenge von 3,0 bis 30 Gew.%;
jeweils bezogen auf den Feststoffanteil der Zusammensetzung wobei

- PF1, PF2 und PF3 unterschiedlich sind; und
- die Zusammensetzung frei von silikonhaltigen Ölen und Wachsen ist, sowie eine Beschichtung erhältlich aus dieser Zusammensetzung.

Die Erfindung ist ferner gerichtet auf die Verwendung der erfindungsgemäßen Zusammensetzung als Form- oder Beschichtungsmasse.

Die Erfindung ist weiterhin gerichtet auf eine Zusammensetzung enthaltend
- ein silikonfreies Wachs (W)
- ein Bindemittel (B)
- Pigmente und Füllstoffe,
wobei die Zusammensetzung frei von fluorhaltigen Polymeren ist und
einen Nass-Reibungskoeffizienten von nicht mehr als 0,20 aufweist.

EP 3 686 172 A1

**Beschreibung**

Die vorliegende Erfindung betrifft eine Zusammensetzung zur Oberflächenbehandlung, insbesondere geeignet zur Holzbehandlung und eine Beschichtung erhältlich aus dieser Zusammensetzung. Die Zusammensetzung ist insbesondere geeignet für Flächen, die der Außenwitterung ausgesetzt sind.

Oberflächen sind üblicherweise Schmutzpartikeln ausgesetzt, die sich auf der Oberfläche anlagern können. Im Falle von Außenflächen kann eine derartige Verschmutzung durch abfließendes Wasser nach Regen oder Tauaufkommen teilweise oder vollständig wieder beseitigt werden. Jedoch ist es wünschenswert, dass möglichst wenig Schmutz anhaftet und auch Wasser, welches letztlich auch nur eine polare Verbindung ist, schlecht haftet bzw. schnell wieder abfließt und/oder verdunstet.

Je nach Hydrophilie oder Hydrophobie der Oberfläche können die entsprechenden unpolaren oder polaren Schmutzpartikel besser oder schlechter anhaften. Auf hydrophilen Oberflächen läuft Wasser jedoch normalerweise schlecht ab, sondern es bildet sich eine Wasserschicht auf der Oberfläche und die Oberfläche selbst nimmt ebenfalls Feuchtigkeit auf. Feuchte Oberflächen sind jedoch im Allgemeinen unerwünscht, da sie unter anderem dem biogenen Bewuchs mit Algen, Pilzen, Flechten, etc. Vorschub leisten und sich außerdem negativ auf die Wärmedämmeigenschaften auswirken. Unpolare Schmutzpartikel haften zwar schlecht an, aber ein Abfließen oder Abgleiten des Wassers in Form von Tropfen findet in der Regel ebenfalls nicht statt. Die gebildete Wasserschicht und das in die Oberfläche aufgenommene Wasser müssen hingegen nach dem Regen- oder Tauereignis etc. verdunsten. Anhaftender Schmutz wird hier folglich kaum oder überhaupt nicht durch abfließendes Wasser entfernt. Zudem setzt die Trocknung erst nach dem Regen oder Tauereignis ein. Auf (hoch-)hydrophoben Oberflächen läuft Wasser ab einer bestimmten Tropfengröße ab. Die Größe, ab der ein Tropfen abläuft hängt neben der Hydrophobie der Oberfläche von der Oberflächenstruktur ab. Auf einer rauhen Oberfläche, d.h. eine Oberfläche aufweisend einen hohen Reibungswiderstand, ist die notwendige Tropfengröße höher, da die Hangabtriebskraft die Haft- bzw. Gleitreibung überwinden muss.

Zudem führt ein höherer Reibungskoeffizient der Oberfläche in der Regel zu einem besseren Anhaften der Schmutzpartikel, unabhängig von ihrer chemischen Natur. Bei einem geringeren Reibungskoeffizienten läuft Wasser folglich besser und schneller ab und kann etwaige Schmutzpartikel mitnehmen. Diese haften aufgrund des geringeren Reibungskoeffizienten schlechter an und werden somit noch leichter entfernt.

Ein Beispiel für Oberflächen aufweisend einen geringen Reibungskoeffizienten sind Oberflächen, die fluorierte Polymere enthalten oder aus ihnen bestehen, wie beispielsweise PTFE. Jedoch sind derartige Beschichtungen in der Regel durch das eingesetzte Polymer teuer. Dazu kommt der ökologische Aspekt, da fluorierte Polymere bereits in der Herstellung aufwendig sind und auch nach der Applikation fluorhaltige Verbindungen in die Umgebung abgeben. Zudem müssen fluorhaltige Verbindungen aufwendig entsorgt werden.

Auch das Ablaufverhalten des Wassers auf fluorierten Oberflächen ist nicht immer zufriedenstellend. Auf PTFE läuft Wasser beispielsweise nicht rückstandsfrei ab, so dass die verbleibenden Ablaufbahnen verdunsten müssen und darin möglicherweise enthaltener Schmutz auf der Oberfläche zurückbleibt. Der niedrige Reibungskoeffizient von PTFE führt so zwar zu einem relativ schnellen Ablaufen des Wassers und größere Schmutzpartikel werden so in der Regel entfernt. Jedoch kann feinteiliger Schmutz in den Ablaufbahnen auf der Oberfläche verbleiben, was häufig kürzere Reinigungsintervalle erforderlich macht. Zudem begünstigt Feuchtigkeit auf der Oberfläche unter anderem den mikrobiellen Bewuchs und wirkt sich negativ auf die Wärmedämmungleistung aus, wie oben bereits erläutert. Eine Oberfläche mit dem Reibungskoeffizienten von PTFE, auf der Wasser jedoch rückstandsfrei abläuft, ist daher wünschenswert.

Folglich besteht die Aufgabe der vorliegenden Erfindung darin, eine Zusammensetzung zur Beschichtung von Oberflächen zur Verfügung zu stellen, auf der Schmutz schlecht anhaftet und gleichzeitig Wasser gut abfließt bzw. abläuft. Zudem sollte der Einsatz von fluorhaltigen Polymeren soweit wie möglich reduziert werden bzw. ganz darauf verzichtet werden können.

Das erfindungsgemäße Problem wurde gelöst durch eine Zusammensetzung enthaltend

-   Wasser und/oder organische Lösemittel

-   ein silikonfreies Wachs (W)

-   ein Bindemittel (B)

-   ein oder mehrere Pigment(e) und/oder Füllstoff(e) (PF1) aufweisend eine mittlere Teilchengröße von 0,1 bis 1,0 μm in einer Gesamtmenge von 8,0 bis 55 Gew.%;

-   ein oder mehrere Pigment(e) und/oder Füllstoff(e) (PF2) aufweisend eine mittlere Teilchengröße von größer als 1,0 bis 10 μm in einer Gesamtmenge von 5,0 bis 40 Gew.%;

- ein oder mehrere Pigment(e) und/oder Füllstoff(e) (PF3) aufweisend eine mittlere Teilchengröße von größer als 10 bis 40 $\mu$m in einer Gesamtmenge von 3,0 bis 30 Gew.%;
jeweils bezogen auf den Feststoffanteil der Zusammensetzung
wobei

- PF1, PF2 und PF3 unterschiedlich sind; und

- die Zusammensetzung frei von silikonhaltigen Ölen und Wachsen ist.

Die erfindungsgemäße Zusammensetzung weist durch die erfindungsgemäße Füllstoffkombination überraschenderweise einen Reibungskoeffizienten auf, der im Bereich fluorhaltiger Polymere liegt, wobei auf den Einsatz fluorhaltiger Polymere vollständig verzichtet werden kann.

Dies ist umso mehr überraschend, da der Fachmann aufgrund der erfindungsgemäßen heterogenen Größenverteilung der Pigmente und Füllstoffe an sich eine Oberflächenstruktur erwarten würde, die mehr Unregelmäßigkeiten und somit einen höheren Reibungskoeffizienten aufweist. Im Gegensatz zu einer homogenen Partikelgrößenverteilung in der alle Partikel (ungefähr) gleich groß sind, ist bei der erfindungsgemäßen Pigment-/Füllstoffkombination keine Anordnung der Partikel in einer Kugelpackung, ähnlich zu beispielsweise Salzkristallen etc., zu erwarten.

Zudem sind bei unterkritischen Formulierungen, die in der vorliegenden Anmeldung bevorzugt sind, die Pigmente und Füllstoffe normalerweise vollständig vom Bindemittel umschlossen und somit treten direkte Wechselwirkungen der Partikeloberfläche mit Wasser und/oder Schmutzpartikeln nicht auf. Daher ist es umso erstaunlicher, dass die erfindungsgemäße Pigment-/Füllstoffkombination den Reibungskoeffizienten senkt, d.h. die Pigmente und Füllstoffe Auswirkungen auf die Oberflächeneigenschaften der Beschichtung haben, ohne dass sich die Oberflächen der Pigmente und Füllstoffe als solche Teil der Oberfläche der Beschichtung sind.

Durch den, mit der erfindungsgemäßen Zusammensetzung erhaltenen, geringen Reibungskoeffizienten, wird das rückstandsfreie Abgleiten verbessert, d.h. die gebildeten Wassertropfen gleiten bereits bei einer kleineren Größe ab und hinterlassen keine Wasserreste, beispielsweise Ablaufrinnen oder Ablaufbahnen. Die erfindungsgemäße Pigment-/Füllstoffkombination zeichnet sich weiterhin dadurch aus, dass die Oberflächenenergie (OFE) der Beschichtung kaum durch die Pigmente/Füllstoffe beeinflusst wird, insbesondere nicht stark ansteigt wie man üblicherweise durch die Zugabe von Pigmenten und Füllstoffen erwarten würde. Im Gegenteil, insbesondere der polare Anteil (PA) der Oberflächenenergie wird durch die erfindungsgemäße Füllstoffkombination deutlich herabgesetzt, was sich vorteilhaft auf das Abgleiten der Wassertropfen auswirkt. Der polare Anteil ist sogar geringer als der von PTFE, wie im experimentellen Teil gezeigt.

Folglich stellt die vorliegende Erfindung eine Zusammensetzung zur Verfügung, die viele Vorteile fluorpolymerhaltiger Beschichtungen aufweist, jedoch ökologisch so gut wie unbedenklich ist.

Wie oben erwähnt, kann auf den Einsatz von fluorhaltigen Polymeren verzichtet werden. Die Zusammensetzung der vorliegenden Erfindung ist daher üblicherweise frei von fluorhaltigen Polymeren, vorzugsweise frei von fluorhaltigen Verbindungen mit Ausnahme der Partikel und Füllstoffe.

Die Zusammensetzung der vorliegenden Erfindung ist ferner frei von silikonhaltigen Ölen und Wachsen. Gemäß der vorliegenden Erfindung wird unter einem silikonfreien Wachs bzw. einem silikonfreien Öl ein Wachs bzw. Öl verstanden welches frei von Si-O-C-Bindungen und Si-C-Bindungen ist.

Vorzugsweise ist die Zusammensetzung der vorliegenden Erfindung ferner frei von Silikonharzen, Siloxanen und Silanen. Derartige Verbindungen weisen üblicherweise eine Si-O-C- oder Si-C-Bindungen auf.

Besonders bevorzugt ist es, wenn die Zusammensetzung der vorliegenden Erfindung frei von Verbindungen ist, die eine Si-O-C- oder Si-C-Bindung aufweisen. Noch stärker bevorzugt ist die Zusammensetzung der vorliegenden Erfindung frei von siliziumhaltigen Verbindungen mit Ausnahme der Pigmente und Füllstoffe.

Die erfindungsgemäße Füllstoffkombination wird im Folgenden näher beschrieben.

Die Gesamtmenge an Pigment(en) und/oder Füllstoff(en) aufweisend eine mittlere Teilchengröße von 0,10 bis 1,0 $\mu$m beträgt 8,0 bis 55 Gew.%, vorzugsweise 15 bis 50 Gew.%, stärker bevorzugt 20 bis 40 Gew.%, jeweils bezogen auf den Feststoffanteil der Zusammensetzung. Diese(s) Pigment(e) und/oder Füllstoff(e) enthalten, vorzugsweise bestehen aus Pigment(en) und/oder Füllstoff(en) (PF1).

Das eine oder die mehrerer Pigment(e) und/oder Füllstoff(e) (PF1) aufweisend eine mittlere Teilchengröße von 0,10 bis 1,0 $\mu$m ist/sind vorzugsweise ausgewählt aus Pigmente(n) und/oder Füllstoffe(n) aufweisend eine mittlere Teilchengröße von 0,15 bis 0,80 $\mu$m, stärker bevorzugt aufweisend eine mittlere Teilchengröße von 0,20 bis 0,60 $\mu$m.

Vorzugsweise weist PF1 eine Mohs-Härte von mindestens 3,0, stärker bevorzugt von mindestens 3,5 und insbesondere bevorzugt von 4,0 auf.

PF1 ist vorzugsweise ausgewählt aus Metall-oxiden oder Metall-sulfiden, wie beispielsweise $TiO_2$, ZnO oder ZnS, und/oder aus silikatischen Füllstoffen, wie beispielsweise Feldspat, Quarz, Cristobalit, Kieselgur und Kieselsäuren, stärker bevorzugt ist PF1 ist ausgewählt aus Metall-oxiden oder Metall-sulfiden, wie beispielsweise $TiO_2$, ZnO oder ZnS,

insbesondere $TiO_2$.

Die Gesamtmenge an Pigment(en) und/oder Füllstoff(en) aufweisend eine mittlere Teilchengröße von größer als 1,0 bis 10 $\mu$m beträgt 5,0 bis 40 Gew.%, vorzugsweise 6,5 bis 35 Gew.%, stärker bevorzugt 8 bis 30 Gew.%, jeweils bezogen auf den Feststoffanteil der Zusammensetzung. Diese(s) Pigment(e) und/oder Füllstoff(e) enthalten, vorzugsweise bestehen aus Pigment(en) und/oder Füllstoff(en) (PF2).

Das eine oder die mehrerer Pigment(e) und/oder Füllstoff(e) (PF2) aufweisend eine mittlere Teilchengröße von größer als 1,0 bis 10 $\mu$m ist/sind vorzugsweise ausgewählt aus Pigmente(n) und/oder Füllstoffe(n) aufweisend eine mittlere Teilchengröße von 1,5 bis 9,0 $\mu$m, stärker bevorzugt aufweisend eine mittlere Teilchengröße von 2,0 bis 8,0 $\mu$m.

Üblicherweise weist PF2 eine Mohs-Härte von nicht mehr als 5,0 auf, vorzugsweise von nicht mehr als 4,0 auf und insbesondere bevorzugt von nicht mehr als 3,0 auf.

PF2 ist vorzugsweise ausgewählt aus Carbonaten oder Sulfaten, wie beispielsweise Erdalkalicarbonaten, Calcit, Kreide, Gips, Bariumsulfat, und/oder aus silikatischen Füllstoffen, insbesondere Schicht- und Ton-silikaten, wie beispielsweise Talkum, Kaolin und Glimmer-silikate und/oder aus Oxiden oder Hydroxyden, beispielsweise $Al(OH)_3$, stärker bevorzugt ist PF2 ausgewählt aus Carbonaten oder Sulfaten, wie beispielsweise Erdalkalicarbonaten, Calcit, Kreide, Gips, Bariumsulfat, insbesondere Calciumcarbonat.

Die Gesamtmenge an Pigment(en) und/oder Füllstoff(en) aufweisend eine mittlere Teilchengröße von größer als 10 bis 40 $\mu$m beträgt 3,0 bis 30 Gew.%, vorzugsweise 5,0 bis 25 Gew.%, stärker bevorzugt 7,0 bis 20 Gew.%, jeweils bezogen auf den Feststoffanteil der Zusammensetzung. Diese(s) Pigment(e) und/oder Füllstoff(e) enthalten, vorzugsweise bestehen aus Pigment(en) und/oder Füllstoff(en) (PF3).

Das eine oder die mehrerer Pigmente(s) und/oder Füllstoffe(s) (PF3) aufweisend eine mittlere Teilchengröße von größer als 10 bis 40 $\mu$m ist/sind vorzugsweise ausgewählt aus Pigmente(n) und/oder Füllstoffe(n) aufweisend eine mittlere Teilchengröße von größer als 10 bis 35 $\mu$m, stärker bevorzugt aufweisend eine mittlere Teilchengröße von größer als 10 bis 30 $\mu$m.

Üblicherweise weist PF3 eine Mohs-Härte von nicht mehr als 5,0 auf, vorzugsweise von nicht mehr als 4,0 auf und insbesondere bevorzugt von nicht mehr als 3,0 auf.

Vorzugsweise besteht PF3 aus anisotropen, beispielsweise lamellaren, stäbchen- oder plättchenförmigen Teilchen, d.h. die größte räumliche Ausdehnung der Teilchen ist wesentlich größer als die Ausdehnung in einer dazu orthogonal stehenden Richtung.

PF3 ist vorzugsweise ausgewählt aus Carbonaten oder Sulfaten, wie beispielsweise Erdalkalicarbonaten, Calcit, Kreise, Gips, Bariumsulfat, und/oder aus silikatischen Füllstoffen, insbesondere Schicht- und Ton-silikaten, wie beispielsweise Talkum, Kaolin und Glimmer-silikate, und/oder aus Oxiden oder Hydroxyden, beispielsweise $Al(OH)_3$, stärker bevorzugt ist PF3 ausgewählt aus Schicht- und Ton-silikaten, wie beispielsweise Talkum, Kaolin und Glimmer-silikate, insbesondere Schichtsilikaten, wie z.B. Talkum.

PF1, PF2 und PF3 sind unterschiedlich. Üblicherweise unterscheiden sich PF1, PF2 und PF3 untereinander jeweils bezüglich ihrer chemischen Zusammensetzung und/oder ihrer mittleren Teilchengröße, vorzugsweise unterscheiden sich PF1, PF2 und PF3 untereinander jeweils bezüglich ihrer chemischen Zusammensetzung und ihrer mittleren Teilchengröße.

Durch die erfindungsgemäße Pigment-/Füllstoffkombination wird der Reibungskoeffizient der Oberflächen erhältlich aus der Zusammensetzung gemäß der vorliegenden Erfindung weiter gesenkt. Zusätzlich wird insbesondere der polare Anteil der Oberflächenenergien deutlich herabgesetzt wie oben im Detail ausgeführt.

Optional kann die erfindungsgemäße Zusammensetzung einen strukturgebenden Füllstoff enthalten. Durch den Einsatz eines strukturgebenden Füllstoffes erhält die Oberfläche eine Mikrostruktur wodurch der Reibungskoeffizient leicht erhöht wird. Jedoch fällt diese Erhöhung sehr gering aus, so dass das Ablaufverhalten des Wassers kaum beeinflusst wird. Auf glatten Oberflächen läuft oder rollt abfließendes Wasser häufig über einige wenige Bahnen ab. Hier kann es zu Ablagerungen entlang dieser Bahnen kommen. Durch die erzeugte Mikrostruktur wird ablaufendes Wasser in unterschiedliche Bahnen gelenkt, wodurch derartige Ablagerungen deutlich reduziert werden können bzw. verteilt werden, so dass eine Reinigung seltener erforderlich ist. Zudem können etwaige Ablagerungen bei Regen-/Tauereignisse etc. durch abfließende oder abrollende Wassertropfen besser wieder entfernt werden. Sollte es zu einer geringfügigen Verschlechterung des Ablaufverhaltens kommen (sofern überhaupt eine Verschlechterung eintritt) wird dies durch die weiter verbesserten Selbstreinigungseigenschaften mehr als aufgewogen.

Der strukturgebende Füllstoff weist üblicherweise eine mittlere Teilchengröße von größer als 40 bis 160 $\mu$m, auf stärker bevorzugt von größer als 40 bis 150 $\mu$m noch stärker bevorzugt von 50 bis 100 $\mu$m auf.

Die strukturgebende Füllstoff, sofern vorhanden, ist vorzugsweise ein Leichtfüllstoff, üblicherweise aufweisend eine Schüttdichte von nicht mehr als 1,0 $kg/dm^3$, vorzugsweise nicht mehr als 0,60 $kg/dm^3$ und am stärksten bevorzugt nicht mehr als 0,30 $kg/dm^3$. Durch die Verwendung eines Leichtfüllstoffes kann die oben erwähnte Struktur mit einer geringen Masse an Füllstoff erreicht werden. Zudem "schwimmen" die Leichtfüllstoffe auf, d.h. bewegen sich bei und ggf. auch nach Auftragung zur Oberfläche der Beschichtung. So kann die oben erwähnte Struktur, falls gewünscht, mit einer geringeren Menge an Füllstoff erreicht werden. Die oben erwähnte Struktur kann jedoch auch mit einem Füllstoff mit höherer Schüttdichte erreicht werden.

Üblicherweise ist die Gesamtmenge an Pigmenten und Füllstoffen aufweisend eine mittlere Teilchengröße von größer als 40 $\mu$m bis 160 $\mu$m, bezogen auf den Feststoffanteil der Zusammensetzung, vorzugsweise 0,10 bis 5,0 Gew.-%, bevorzugter 0,30 bis 3,0 Gew.% und am stärksten bevorzugt 0,80 bis 2,5 Gew.%. Die Pigmenten und Füllstoffen aufweisend eine mittlere Teilchengröße von größer als 40 $\mu$m bis 160 $\mu$m enthalten, vorzugsweise bestehen aus dem strukturgebenden Füllstoff.

Der strukturgebende Füllstoff sind beispielsweise Glaskugeln, insbesondere Halbhohlglaskugeln oder Hohlglaskugeln, Schaumglas, insbesondere geschlossenes Schaumglas, Perlite, insbesondere geschlossene Perlite, geblähte Vermiculite, insbesondere geschlossene geblähte Vermiculite, vorzugsweise Glaskugeln, insbesondere Halbhohlglaskugeln oder Hohlglaskugeln und besonders bevorzugt Hohlglaskugeln.

Vorzugsweise ist der Gewichtsanteil an Pigment(en) und/oder Füllstoff(en) aufweisend eine mittlere Teilchengröße von 0,10 bis 1,0 $\mu$m größer als der Gewichtsanteil an Pigment(en) und/oder Füllstoff(en) aufweisend eine mittlere Teilchengröße von größer als 1,0 bis 10 $\mu$m und/oder, vorzugsweise und, ist der Gewichtsanteil an Pigment(en) und/oder Füllstoff(en) aufweisend eine mittlere Teilchengröße von größer als 1,0 bis 10 $\mu$m größer als der Gewichtsanteil an Pigment(en) und/oder Füllstoff(en) aufweisend eine mittlere Teilchengröße von größer als 10 bis 40 $\mu$m, jeweils bezogen auf den Feststoffanteil der Zusammensetzung.

Vorzugsweise ist die mittlere Teilchengröße von PF2 1,5 bis 50 mal größer als die mittlere Teilchengröße von PF1, stärker bevorzugt ist die mittlere Teilchengröße von PF2 4,0 bis 30 mal größer als die mittlere Teilchengröße von PF1, noch stärker bevorzugt ist die mittlere Teilchengröße von PF2 7,0 bis 20 mal größer als die mittlere Teilchengröße von PF1.

Vorzugsweise ist die mittlere Teilchengröße von PF3 1,5 bis 40 mal größer als die mittlere Teilchengröße von PF2, stärker bevorzugt ist die mittlere Teilchengröße von PF3 4,0 bis 30 mal größer als die mittlere Teilchengröße von PF2, noch stärker bevorzugt ist die mittlere Teilchengröße von PF3 7,0 bis 20 mal größer als die mittlere Teilchengröße von PF2.

Vorzugsweise ist die mittlere Teilchengröße von des strukturgebenden Füllstoffes größer als die mittlere Teilchengröße von PF3, stärker bevorzugt ist die mittlere Teilchengröße des strukturgebenden Füllstoffes mindestens 1,4 mal größer als die mittlere Teilchengröße von PF3, noch stärker bevorzugt ist die mittlere Teilchengröße des strukturgebenden Füllstoffes mindestens 1,8 mal größer als die mittlere Teilchengröße von PF3.

Neben den Pigmenten oder Füllstoffen PF1, PF2, PF3 und dem strukturgebendem Füllstoff, falls vorhanden, kann die Erfindungsgemäße Zusammensetzung weitere Pigmente und/oder Füllstoffe enthalten.

Die Menge an Pigmenten oder Füllstoffen, die sich von PF1, PF2 und PF3, inklusive ihrer bevorzugten Ausführungsformen, und strukturgebendem Füllstoff, falls vorhanden, inklusive seiner bevorzugten Ausführungsformen, unterscheiden ist vorzugsweise nicht mehr als 15 Gew.-%, stärker bevorzugt nicht mehr als 10 Gew.% bezogen auf den Feststoffanteil der Zusammensetzung.

Besonders bevorzugt ist die Menge an Pigmenten oder Füllstoffen, die sich von PF1, PF2 und PF3 in ihrer jeweiligen breitesten Ausführungsform gemäß der vorliegenden Erfindung, und dem strukturgebendem Füllstoff, falls vorhanden, in seiner breitesten Ausführungsform gemäß der vorliegenden Erfindung, unterscheiden vorzugsweise nicht mehr als 15 Gew.-%, stärker bevorzugt nicht mehr als 10 Gew.% bezogen auf den Feststoffanteil der Zusammensetzung.

Die erfindungsgemäße Zusammensetzung weist vorzugsweise eine Pigment-Volumen-Konzentration gemäß EN ISO 4618-1 von 15 % bis 60 %, stärker bevorzugt von 20 bis 55 % noch stärker bevorzugt von 25 bis 55 % auf. Besonders bevorzugt ist eine Pigment-Volumen-Konzentration gemäß EN ISO 4618-1 von 25 bis 40%.

In der vorliegenden Erfindung ist das Wachs üblicherweise hydrophober als das Bindemittel. D.h. der statische Anfangskontaktwinkel von Wasser nach 1 min

Äquilibrieren des Wachses (W) ist normalerweise größer als der statische Anfangskontaktwinkel von Wasser des Bindemittels (B) nach 1 min Äquilibrieren.

Daher weist das das Wachs (W) vorzugsweise einen statischen Anfangskontaktwinkel von Wasser nach 1 min Äquilibrieren auf, der größer ist als der statische Anfangskontaktwinkel von Wasser des Bindemittels (B) nach 1 min Äquilibrieren, vorzugsweise weist das Wachs (W) einen statischen Anfangskontaktwinkel von Wasser nach 1 min Äquilibrieren auf, der mindestens 5°, bevorzugt mindestens 10°, höher ist als der statische Anfangskontaktwinkel von Wasser des Bindemittels (B) nach 1 min Äquilibrieren.

Die Methode zur Bestimmung des statischen Anfangskontaktwinkels ist im experimentellen Teil beschrieben.

In der vorliegenden Anmeldung bedeutet "hydrophob", dass der statische Anfangskontaktwinkel von Wasser nach 1 min Äquilibrieren > 90° ist.

In der vorliegenden Anmeldung bedeutet "hydrophil", dass der statische Anfangskontaktwinkel von Wasser nach 1 min Äquilibrieren $\leq$ 90° ist.

Das Wachs weist üblicherweise einen statischen Anfangskontaktwinkel von Wasser nach 1 min Äquilibrieren von mehr als 90°C auf.

Üblicherweise weist das Bindemittel einen statischen Anfangskontaktwinkel von Wasser nach 1 min Äquilibrieren von ≤ 95°, bevorzugter von ≤ 90° auf, stärker bevorzugt sind ≤ 85° auf.

Das Bindemittel (B) weist normalerweise einen polaren Anteil der Oberflächenenergie von 10% oder mehr, vorzugsweise 15 % oder mehr auf. Normalerweise ist der polare Anteil nicht höher als 50 %.

Das Bindemittel (B) weist normalerweise einen dispersiven Anteil (DA) der Oberflächenenergie von weniger als 90%, vorzugsweise von weniger als 85% auf.

Vorzugsweise beträgt der polare Anteil der mittleren OFE des Bindemittels (B) 1 bis 20 mN/m, stärker bevorzugt sind 2 bis 15 mN/m, noch stärker bevorzugt sind 3 bis 10 mN/m.

Der dispersive Anteil der mittleren OFE des Bindemittels (B) beträgt vorzugsweise 20 bis 50 mN/m, stärker bevorzugt sind 22 bis 40 mN/m, noch stärker bevorzugt sind 24 bis 35 mN/m.

Die mittlere OFE des Bindemittels (B) beträgt vorzugsweise 20 bis 70 mN/m stärker bevorzugt sind 23 bis 50 mN/m, noch stärker bevorzugt sind 26 bis 45 mN/m.

Durch die Zugabe des Wachses (W) wird der polare Anteil der OFE reduziert.

Vorzugsweise senkt das Wachs (W) den polaren Anteil der OFE um mindestens 25 Prozentpunkte, vorzugsweise um mindestens 50 Prozentpunkte verglichen mit dem reinen Bindemittel (B).

Die Absenkung des polaren Anteils der OFE des Bindemittels durch die Zugabe des Wachses (W) beträgt vorzugsweise mindestens 0,5 mN/m, stärker bevorzugt sind mindestens 1,5 mN/m, noch bevorzugter sind 2,5 mN/m.

Vorzugsweise hat das Wachs (W) einen polaren Anteil der OFE von 10 % oder weniger, stärker bevorzugt sind 8 % oder weniger, noch bevorzugter sind 5 % oder weniger.

Das Wachs (W) weist normalerweise einen dispersiven Anteil der OFE von mehr als 90%, vorzugsweise von mehr als 92% auf, noch bevorzugter sind mehr als 95%.

Vorzugsweise beträgt der polare Anteil der mittleren OFE des Wachses (W) 0,01 bis 6 mN/m, stärker bevorzugt sind 0,05 bis 4 mN/m, noch bevorzugter sind 0,1 bis 2 mN/m.

Der dispersive Anteil der mittleren OFE des Wachses (W) beträgt vorzugsweise 20 bis 52 mN/m, stärker bevorzugt sind 24 bis 48 mN/m.

Die mittlere OFE des Wachses (W) beträgt vorzugsweise 22 bis 58 mN/m, stärker bevorzugt sind 24 bis 50 mN/m, noch stärker bevorzugt sind 28 bis 38 mN/m.

Die OFE der Zusammensetzung ist aus mindestens 5 Messwertpaaren (Wasser/Diiodmethan) gemittelt und stellt somit einen Durchschnittswert der OFE ("mittlere OFE") dar.

Vorzugsweise beträgt der polare Anteil der mittleren OFE der Zusammensetzung 0,5 bis 10 mN/m, stärker bevorzugt sind 1 bis 8 mN/m, noch stärker bevorzugt 1 bis 6 mN/m und am stärksten bevorzugt 1 bis 3 mN/m.

Der polare Anteil der mittleren OFE der Zusammensetzung ist vorzugsweise mindestens 0,1 mN/m niedriger als der polare Anteil der mittleren OFE des Bindemittels (B), mehr bevorzugt mindestens 0,5 mN/m niedriger als der polare Anteil der mittleren OFE des Bindemittels (B), noch mehr bevorzugt mindestens 1 mN/m niedriger als der polare Anteil der mittleren OFE des Bindemittels (B).

Der dispersive Anteil der mittleren OFE der Zusammensetzung beträgt vorzugsweise 14 bis 59 mN/m, stärker bevorzugt sind 20 bis 50 mN/m, noch stärker bevorzugt sind 25 bis 40 mN/m und am stärksten bevorzugt 25 bis 35 mN/m.

Die mittlere OFE der Zusammensetzung beträgt vorzugsweise 15 bis 60 mN/m, stärker bevorzugt sind 22 bis 52 mN/m, noch stärker bevorzugt sind 27 bis 42 mN/m. Das Verhältnis des dispersiven zu dem polaren Anteil der mittleren OFE der Zusammensetzung beträgt vorzugsweise 70:1 bis 1:1, stärker bevorzugt sind 60:1 bis 2:1.

Das Bindemittel (B) kann als wasser- und lösemittelfreies Re-Dispersionspulver eingesetzt werden oder als wässrige und/oder lösemittelhaltige Polymerdispersion. Üblicherweise wird eine wässrige und/oder lösemittelhaltige Polymerdispersion verwendet. Die nichtwässrigen Lösemittel sind üblicherweise organische Lösemittel.

Solche organischen Lösemittel können aliphatische oder aromatische Kohlenwasserstoffe, beispielsweise Toluol, Alkohole Ester oder Ketone, sein, die als Lösemittel für Bindemittel und Lacke bekannt sind.

Die Zusammensetzung gemäß der vorliegenden Erfindung liegt üblicherweise als wässrige und/oder lösemittelhaltige Dispersion vor. Die Gesamtmenge an Wasser und Lösemitteln beträgt üblicherweise 20 bis 60 Gew.% bezogen auf die Gesamtmenge der Zusammensetzung.

Die Menge an zugesetztem Wasser oder organischem Lösemittel wird vom Fachmann je nach der beabsichtigen Anwendung ausgewählt. Bei Dispersionen an einer Mischung aus Wasser und den zuvor genannten organischen Lösemitteln beträgt der Wasseranteil vorzugsweise mehr als 50 Gew.% bezogen auf die Gesamtmasse von Wasser und organischem Lösemittel.

In einer bevorzugten Ausführungsform liegt eine wässrige Dispersion vor. Eine solche wässrige Dispersion kann geringe Mengen an organischen Lösemitteln enthalten, die beispielsweise in den Edukten enthalten sind. Üblicherweise beträgt in diesem Fall deren Anteil nicht mehr als 5 Gew.% bezogen auf die Gesamtmenge der Zusammensetzung.

Solche organischen Lösemittel können aliphatische oder aromatische Kohlenwasserstoffe, beispielsweise Toluol, Alkohole Ester oder Ketone, sein, die als Lösemittel für Bindemittel und Lacke bekannt sind.

Das Bindemittel (B) enthält üblicherweise mindestens 60 Gew.% Kohlenstoff bezogen auf das Gesamtgewicht des Bindemittels (B). Derartige Bindemittel sind normalerweise aus organischen Monomeren aufgebaut, wie beispielsweise Monomeren enthaltend C-C-Doppelbindungen, Monomere die mittels Kondensation oder Additionsreaktionen polymerisiert werden können.

Geeignete Bindemittel bzw. Bindemittelpolymere sind solche auf Basis der Monomere Carbonsäurevinylester mit 3 bis 20 C-Atomen, beispielsweise Vinylacetat und Vinylpropionat, N-Vinylpyrrolidon und dessen Derivate, Vinylaromaten, beispielsweise Styrol und Derivate von Vinylaromaten, wie beispielsweise Derivate von Styrol, Vinylhalogeniden, ethylenisch ungesättigten Carbonsäuren, beispielsweise Acryl-und/oder Methacrylsäure, ethylenisch ungesättigten Carbonsäureestern, beispielsweise Acryl- und/oder Methacrylsäureester mit 1 bis 12 C-Atomen im Alkoholrest, ethylenisch ungesättigten Carbonsäureamiden oder ethylenisch ungesättigten Carbonsäureanhydriden, Säurestern wie Acrylamide und Acrylonitril, vorzugsweise in Form von Polymerdispersionen wie oben erläutert. Wasserverdünnbare Alkydpolymere, Kombinationen von (Meth)Acryl/Alkyd-polymeren, Polyvinylalkohol und deren Mischungen können ebenfalls eingesetzt werden. Besonders bevorzugt wird hierbei auf Polymere und/oder Copolymere (nachfolgend auch kurz (Co)-Polymere genannt) auf (Meth)acrylatbasis, beispielsweise Acrylatbasis, zurückgegriffen. Bei (Co)-Polymeren auf (Meth)acrylatbasis soll es sich im Sinne der vorliegenden Erfindung um solche aus (Meth)acrylsäure und/oder (Meth)acrylsäureestern ((Meth)acrylaten) bzw. deren Mischungen handeln. Unter dem Begriff (Meth)acrylat bzw. (Meth)acrylsäure werden im der vorliegenden Erfindung sowohl Methacrylate bzw. Methacrylsäure als auch Arylate bzw. Acrylsäure bzw. deren jeweilige Mischungen bezeichnet. Bevorzugt wird auf Homopolymere der Acrylsäure und insbesondere auf Copolymere der Acrylsäure und deren Ester, insbesondere Alkylester, und/oder auf Homopolymere der Methacrylsäure und insbesondere Copolymere der Methacrylsäure und deren Ester und/oder Estern der Acrylsäure, insbesondere Alkylester, zurückgegriffen. Die genannten Copolymere der Acrylsäure mit Alkylacrylaten sind hierbei besonders bevorzugt. Besonders zweckmäßig ist somit der Einsatz von Copolymeren, die enthalten oder gebildet sind aus Methacrylsäure und/oder Acrylsäure und Estern der Methacrylsäure und/oder Estern der Acrylsäure. Unter den in diesem Abschnitt genannten Estern, insbesondere Alkylestern, sind die Methyl-, Ethyl, n-Propyl, i-Propyl, n-Butyl, i-Butyl-, t-Butyl, und/oder Hexylester, z.B. 2-Ethylhexylester, der (Meth)arcrylsäure, vorzugsweise der Acrylsäure, besonders geeignet.

Beispielhaft seien als geeignete Alkylester der Acrylsäure und der Methacrylsäure Methylacrylat, Ethylacrylat, Propylacrylat, Butylacrylat, 2-Ethylhexylacrylat, Methylmethacrylat, Ethylmethacrylat, Propylmethacrylat, n-Butylmethacrylat, t-Butylmethacrylat, isoButylmethacrylat, 2-Ethylhexylmethacrylat, Cyclohexylmethacrylat und Cyclohexylacrylat genannt. Diese Alkylester können selbstverständlich sowohl alleine als auch in Form einer Kombination von zwei oder mehreren Alkylestern verwendet werden. Zusätzlich oder anstelle können auch mit funktionellen Gruppen, beispielsweise mit Hydroxyl- oder mit Epoxygruppen funktionalisierte Alkylester der Acrylsäure und/oder der Methacrylsäure eingesetzt werden. Geeignete hydroxygruppenhaltige (Meth)acrylsäureester umfassen Hydroxymethylmethacrylat, Hydroxyethylacrylat, Hydroxypropylmethacrylat, Hydroxypropylacrylat, Hydroxybutylmethacrylat und Hydroxybutylacrylat. Diese Alkylester können sowohl alleine als auch in Kombination eingesetzt werden. Als epoxygruppenhaltige (Meth)acrylsäureester sei exemplarisch auf Glycidylmethacrylat und Glycidylacrylat verwiesen.

Zusätzlich können als Comonomere zu der Acrylsäure, der Methacrylsäure und/oder den Estern, insbesondere Alkylestern, der (Meth)acrylsäure weitere ungesättigte Monocarbonsäuren sowie deren Anhydride und/oder insbesondere ungesättigte Dicarbonsäuren eingesetzt werden. Als geeignete ungesättigte Dicarbonsäuren kommen zum Beispiel Maleinsäure, Fumarsäure, Itaconsäure und Citraconsäure sowie deren Halbester, beispielsweise mit C 1-C 12-Alkoholen in Betracht.

Hierbei sind wässrige Bindemitteldispersionen auf Basis von Acrylat-(co)-polymeren besonders geeignet. Daneben können auch wässrige Bindemitteldispersionen auf Basis von Vinylestern, z.B. Vinylacetat, Styrol, Styrolacrylaten, Butadien, Phenylacetylen und/oder Alkydharzsystemen sowie deren Copolymerisaten eingesetzt werden.

Der Anteil des Bindemittels (B), bezogen auf den Feststoffanteil der Zusammensetzung, beträgt vorzugsweise 10 bis 60 Gew.%, stärker bevorzugt sind 10 bis 50 und insbesondere bevorzugt 12 bis 45 Gew.% bezogen auf den Feststoffanteil der Zusammensetzung.

Zusätzlich kann die Erfindungsgemäße Zusammensetzung noch silikatische Bindemittel enthalten, beispielsweise Wasserglas.

Bevorzugtes Wasserglas ist in Wasser lösliches Wasserglas oder eine Lösung üblicherweise wässrige Lösung von Wasserglas. Vorzugsweise wird Lithium-, Natrium-, Kaliumwasserglas oder Mischungen hiervon eingesetzt.

Das Wachs hat bevorzugt einen Schmelzbereich innerhalb des Bereiches von 40 und 140 °C, stärker bevorzugt ist 45 bis 120°C und am stärksten bevorzugt 50 bis 100°C. Das Wachs ist silikonfrei.

Beispiele sind natürliche Wachse, z. B. Bienenwachs, und Paraffinwachse, und synthetische Wachse, wie Polyalkylenwachse, Polyamide, oxidierte Polyalkylenwachse, Wachse aus niedermolekularen Copolymeren von Ethylen und Acrylsäure bzw. Acrylaten. Besonders bevorzugt sind Polyethylen- und Paraffinwachse und Mischungen hiervon. Im Fall von mehr als einem Wachs beziehen sich Mengen und Temperaturangaben auf die Gesamtheit der Wachse.

Vorzugsweise beträgt die Menge des Wachses 0,10 bis 10 Gew.%, stärker bevorzugt sind 0,2 bis 5 Gew.%, noch stärker bevorzugt sind 0,3 bis 3,0 Gew.%, jeweils bezogen auf den Feststoffanteil der Zusammensetzung.

Die Zusammensetzung kann des Weiteren bis zu 15,0 Gew.%, vorzugsweise bis zu 10,0 Gew.% bezogen auf den Feststoffanteil der Zusammensetzung an üblichen Additiven, z.B. rheologische Additive, Dispergiermitteln, Verdickern, Netzmittel, Filmbindehilfmittel, Biozide, Entschäumern, Fasern etc., enthalten.

Nach Auftragen der Beschichtung und Trocknen bei Raumtemperatur für 48 h beträgt das Verhältnis zwischen organischem Anteil der Beschichtung und dem anorganischen Anteil der Beschichtung vorzugsweise 1,50 bis 0,60, stärker bevorzugt sind 1,30 bis 0,80 und am stärksten bevorzugt sind 1,25 und 0,90. Die Nassschichtstärke, die zu dieser Bestimmung verwendet wird, ist üblicherweise 200 $\mu$m.

Die Zusammensetzung ist vorzugsweise eine Form- oder Beschichtungsmasse, stärker bevorzugt ist ein Anstrichmittel oder Putz.

Die Zusammensetzung kann als wässrige Dispersion vorliegen. Wenn eine wässrige Dispersion vorliegt, beträgt der Wasseranteil vorzugsweise 20 bis 60 Gew.%. Die erfindungsgemäße Zusammensetzung kann aber auch eine Dispersion an einem oder mehrerer organischer Lösemittel sein. Solche organischen Lösemittel können aliphatische oder aromatische Kohlenwasserstoffe, beispielsweise Toluol, Alkohole Ester oder Ketone, sein, die als Lösemittel für Bindemittel und Lacke bekannt sind. Wenn eine Dispersion an organischen Lösemitteln vorliegt, beträgt der Lösemittelanteil vorzugsweise 20 bis 50 Gew.%.

Die erfindungsgemäße Zusammensetzung kann alternativ eine Dispersion an einer Mischung aus Wasser und den zuvor genannten organischen Lösemitteln sein.

Die Menge an zugesetztem Wasser oder organischem Lösemittel wird vom Fachmann je nach der beabsichtigen Anwendung ausgewählt. Bei Dispersionen an einer Mischung aus Wasser und den zuvor genannten organischen Lösemitteln beträgt der Wasseranteil vorzugsweise mehr als 50 Gew.% bezogen auf die Gesamtmasse von Wasser und organischem Lösemittel.

In einer weiteren Ausführungsform ist die Erfindung ferner gerichtet auf eine Zusammensetzung enthaltend

- ein silikonfreies Wachs (W)

- ein Bindemittel (B)

- Pigmente und Füllstoffe,
  wobei die Zusammensetzung frei von fluorhaltigen Polymeren ist und
  einen Nass-Reibungskoeffizienten von nicht mehr als 0,20 aufweist.

Die Merkmale der Zusammensetzung der vorliegenden Erfindung sind auch Merkmale der weiteren Ausführungsform der Erfindung.

Die Erfindung ist weiterhin gerichtet auf eine Beschichtung auf einer Substratoberfläche, die Beschichtung enthaltend

- ein silikonfreies Wachs (W)

- ein Bindemittel (B)

- ein oder mehrere Pigment(e) und/oder Füllstoff(e) (PF1) aufweisend eine mittlere Teilchengröße von 0,1 bis 1,0 $\mu$m in einer Gesamtmenge von 8,0 bis 55 Gew.%;

- ein oder mehrere Pigment(e) und/oder Füllstoff(e) (PF2) aufweisend eine mittlere Teilchengröße von größer als 1,0 bis 10 $\mu$m in einer Gesamtmenge von 5,0 bis 40 Gew.%;

- ein oder mehrere Pigment(e) und/oder Füllstoff(e) (PF3) aufweisend eine mittlere Teilchengröße von größer als 10 bis 40 $\mu$m in einer Gesamtmenge von 3,0 bis 30 Gew.%;
  jeweils bezogen auf den Feststoffanteil der Zusammensetzung
  wobei

- PF1, PF2 und PF3 unterschiedlich sind; und

- die Zusammensetzung frei von silikonhaltigen Ölen und Wachsen ist.

Die Beschichtung auf der Substratoberfläche ist erhältlich durch Verwendung der erfindungsgemäßen Zusammensetzung.

Vorzugsweise weist die Beschichtung einen Nass-Reibungskoeffizienten von nicht mehr als 0,20 auf, stärker bevorzugt nicht mehr als 0,15 und am stärksten bevorzugt nicht mehr als 0,10.

Vorzugsweise weist die Beschichtung einen Trocken-Reibungskoeffizienten von nicht mehr als 0,25 auf, stärker bevorzugt nicht mehr als 0,20 und am stärksten bevorzugt nicht mehr als 0,15.

Durch den geringen Reibungskoeffizienten, der sich im Bereich von PTFE befindet, wird das Feuchtemanagement der, aus der erfindungsgemäßen Zusammensetzung, erhaltenen Beschichtungen deutlich verbessert. Zudem läuft im Gegensatz zu PTFE das Wasser vollständig ab.

Die bevorzugten Ausführungsformen der Zusammensetzung gemäß der Erfindung sind auch bevorzugte Ausführungsformen der Beschichtung gemäß der vorliegenden Erfindung und umgekehrt.

Das Substrat ist vorzugsweise eine Wand, stärker bevorzugt sind Außenflächen, die der Bewitterung ausgesetzt sind, z.B. Außenfassaden von Gebäuden. Ein bevorzugtes Substrat ist Holz

Die Erfindung ist ferner auf die Verwendung der erfindungsgemäßen Zusammensetzung als Form- oder Beschichtungsmasse, vorzugsweise ist die Form- oder Beschichtungsmasse ein Anstrichmittel oder Putz ist.

Die bevorzugten Ausführungsformen der Zusammensetzung und der Beschichtung gemäß der Erfindung sind auch bevorzugte Ausführungsformen der Verwendung gemäß der vorliegenden Erfindung und umgekehrt.

MESSMETHODEN

Schmelzpunkt Wachs:

ISO EN 11357-3

Kontaktwinkel und Oberflächenenergie sowie deren polarer und dispersiver Anteil

Als Prüfsubstanzen für den Kontaktwinkel wurden Wasser und Diiodmethan verwendet. Die Tropfengröße war jeweils $2\mu l$ bis $4\mu l$.

Da eine direkte Vermessung einer Wachsoberfläche u.U. nicht möglich ist, da das Wachs beim Aushärten auskristallisieren kann und somit eine Messung nicht möglich oder zu weich wurde eine Mischung von 3,55 Gew.% Wachs und 96,45 Gew.% des unten genannten Bindemittels bezogen auf den Feststoffanteil hergestellt und eine entsprechende Beschichtung erstellt. Die Kontaktwinkelmessungen erfolgten an dieser Oberfläche.

Als Bindemittel wurde eine wässrige Dispersion basierend auf einem Copolymer aus Acryl- und Methacrylsäureestern aufweisend einen Festkörperanteil von 50 Gew.% (nach DIN EN ISO 3251, 2h; 105 °C), eine Brookfieldviskosität von ca. 4000 mPa•s nach DIN EN ISO 2555 (Spindel 4; 20 Upm; 23°C), erhältlich als Mowilith LDM 7719 von Celanese verwendet.

Der statische Kontaktwinkel wurde nach 3 Tagen Trocknung bei 23 °C und 50 % relativer Luftfeuchtigkeit bestimmt. Nach Auftragen des Wassertropfens bzw. Diiodmethantropfens wird 60 sec abgewartet bevor die Messung erfolgt.

Die Bestimmung des Kontaktwinkels an der Dreiphasen-Berührungslinie zwischen Festkörper, Flüssigkeit und Gas erfolgt mit dem Kontaktwinkelmessgerät G1 der Firma Krüss. Auf jedem Prüfkörper werden jeweils mindestens fünf Tropfen an verschiedenen Stellen gemessen.

Die Bestimmung der Oberflächenenergie erfolgt nach der Methode von Owens-Wendt-Rabel-Kaeble wie folgt (Quelle Krüss AG).

Nach OWENS, WENDT, RABEL und KAELBLE lässt sich die Oberflächenspannung jeder Phase in einen polaren und einen dispersiven Anteil aufspalten:

$$\sigma_l = \sigma_l^P + \sigma_l^D \quad \text{(Gleichung 1)}$$

$$\sigma_s = \sigma_s^P + \sigma_s^D \quad \text{(Gleichung 2)}$$

OWENS und WENDT legten ihre Gleichung der Grenzflächenspannung

$$\gamma_{sl} = \sigma_s + \sigma_l - 2\left(\sqrt{\sigma_s^D \cdot \sigma_l^D} + \sqrt{\sigma_s^P \cdot \sigma_l^P}\right) \quad \text{(Gleichung 3)}$$

zugrunde und kombinierten sie mit der YOUNG-Gleichung

$$\sigma_s = \gamma_{sl} + \sigma_l \cdot \cos\theta \quad \text{(Gleichung 4)}$$

Die beiden Autoren lösten das Gleichungssystem mit Hilfe von Kontaktwinkeln zweier Flüssigkeiten mit bekanntem dispersiven und polaren Anteil der Oberflächenspannung. Die Gleichungen 3 und 4 werden kombiniert und die resultierende Gleichung durch Umstellung an die allgemeine Geradengleichung angepasst.

$$y = mx + b \quad \text{(Gleichung 5)}$$

Die angepasste Gleichung sieht folgendermaßen aus:

$$\underbrace{\frac{(1+\cos\theta)\cdot\sigma_l}{2\sqrt{\sigma_l^D}}}_{y} = \underbrace{\sqrt{\sigma_s^P}}_{m} \cdot \underbrace{\sqrt{\frac{\sigma_l^P}{\sigma_l^D}}}_{x} + \underbrace{\sqrt{\sigma_s^D}}_{b}$$

$$\text{(Gleichung 6)}$$

Bei einer linearen Regression der Auftragung von y gegen x ergibt sich $\sigma_s P$ aus dem Quadrat der Geradensteigung m und $\sigma_s D$ aus dem Quadrat des Ordinatenabschnitts b.

Die Oberflächenenergien sind in mN/m angegeben.

Pigment-Volumen-Konzentration

Die Pigment-Volumen-Konzentration (EN ISO 4618-1) gibt das Volumenverhältnis zwischen Pigmenten / Füllstoffen und dem Bindemittel im Beschichtungsfilm wieder.
Die ebenfalls in der Rezeptur enthaltenen Additive wurden in der Berechnung nicht berücksichtigt. Lösemittel und Wasser sind im gehärteten Film ohnehin nicht mehr enthalten und fallen damit ebenfalls weg. Das Wachs, sofern vorhanden, wurde bei der Berechnung nicht berücksichtigt.

Mittlere Teilchengröße

In der vorliegenden Anmeldung werden die Pigmente und Füllstoffe anhand ihrer mittleren Teilchengröße charakterisiert. Dies erfolgt durch Bestimmung der Partikelgrößenverteilung. Der Wert dx bedeutet hierbei den prozentualen Anteil (x) der Teilchen die einen Durchmesser kleiner als d haben. Dies bedeutet, dass der d20-Wert den Partikeldurchmesser darstellt bei dem 20 Gew.% aller Partikel kleiner ist. Der d50-Wert ist folglich der volumenmittlere Medianwert, d.h. 50 Vol.% aller Teilchen sind kleiner als diese Partikelgröße. In der vorliegenden Erfindung ist die Partikelgröße als volumenmittlere Medianwert d50 angegeben. Um den volumenmittleren Medianwert d50 zu ermitteln wurde ein Laserbeugungs-Partikelgrößenbestimmungsinstrument Mastersizer 3000 von der Firma Malvern Instruments Limited, U. K. verwendet. Die Methode und das Instrument sind dem Fachmann bekannt und werden routinemäßig eingesetzt um Partikelgrößen von Füllstoffe, Pigmenten und anderen partikelförmigen Materialien zu bestimmen.
Die Messung wird in Wasser durchgeführt. Die Probe wird mittels Hochgeschwindigkeitsrührer und Ultraschall dispergiert.
Die mittlere Teilchengröße entspricht dem d50-Wert.

Schüttdichte

Die Schüttdichte wird gemäß ISO 697 bestimmt.

Reibungskoeffizient (trocken)

Der dynamische Reibungskoeffizient ($\mu_R$) wurde in Anlehnung an ISO 8295:1995 und ASTM D1894-11 bestimmt. Ein Altek Slip tester wurde verwendet. Ein Film mit einer Nasschichtstärke von 200 $\mu$m Dicke wurde auf Lenetta-Folie erstellt und 3 Tage bei Raumtemperatur getrocknet. Drei Prüfkörper (150x240 mm$^2$) wurden in Auftragungsrichtung ausgeschnitten und bei 23°C für mindestens 16 h thermostatiert. Bei dieser Temperatur wurde auch der Test durchgeführt. Die Probe wurde derart auf dem Messtisch angebracht, dass die Auftragungsrichtung der Beschichtung mit der Bewegungsrichtung des Schlittens übereinstimmt. Der Schlitten besteht aus Edelstahl. Das Gewicht des Schlittens betrug 1,00 kg. Der Schlitten wurde dann mit einer konstanten Geschwindigkeit (127 mm/min) über den Tisch gezogen. Der zeitliche Verlauf der Kraft wurde aufgezeichnet. Die mittlere Kraft die zur Bewegung des Schlittens erforderlich ist wurde wie in Absatz 9.2 der ISO 8295:1995 beschrieben bestimmt. Der dynamische Reibungskoeffizient wurde dann wie in ISO 8295:1995 beschrieben als

$$\mu_R = \frac{F_f}{w \cdot g}$$

wobei $F_f$ die dynamische Reibungskraft in Newton darstellt, w das Gewicht des Schlittens in Kilogramm und g die Gravitationskonstante 9,81 m$^2$/s darstellt, berechnet.

Reibungskoeffizient (nass)

Die Methode zur Bestimmung des Reibungskoeffizienten (trocken) wurde wiederholt wobei der Prüfkörper mit einer Wassermenge von 5 g $\pm$ 0,2 g unter Verwendung einer zerstäubenden Sprühflasche benetzt wurde.

Ablaufwinkel

Der Prüfkörper wurde analog dem Prüfkörper zur Bestimmung des Reibungskoeffizienten hergestellt. Der Prüfkörper wurde auf einem Neigetisch angebracht und waagerecht nivelliert. Ein Wassertropfen (0,2 g) wurde mit einer Pipette aufgetragen und 60 s ruhen gelassen. Anschließend wurde die Neigung des Prüfkörpers mit einer Geschwindigkeit von 1°/s erhöht. Der Winkel bei dem der Wassertropfen anfing, abzulaufen, wurde als Ablaufwinkel aufgezeichnet. Die Messung wurde dreimal wiederholt wobei der Wassertropfen an einer anderen Stelle des Prüfkörpers aufgetragen wurde und ein Mittelwert gebildet.

BEISPIELE:

Verwendete Stoffe:

Bindemittel:

Wässrige Dispersion basierend auf einem Copolymer aus Acryl- und Methacrylsäureestern aufweisend einen Festkörperanteil von 50 Gew.% aus der Acronal®-Reihe von BASF.

Titandioxid, mittlere Teilchengröße = 0,25 $\mu$m (Beispiel für PF1)

Calziumcarbonat, mittlere Teilchengröße = 2,5 $\mu$m (Beispiel für PF2)

Schichtsilikat, mittlere Teilchengröße = 25 $\mu$m (Beispiel für PF3)

Cristobalite, mittlere Teilchengröße = 14 $\mu$m (Beispiel für PF3)

Hohlglaskugeln, mittlere Teilchengröße = 50$\mu$m (Beispiel für strukturgebenden Füllstoff)

Wachs:

Polyethylenwachs mit einem Schmelzbereich von 60 bis 69°C, einer Dichte von 0,97 g/cm$^3$ (DIN EN ISO 2811-1) und einer Viskosität von 30 mPa·s (DIN 53019 1.921s-1). Dispersion mit einem Feststoffanteil von 35 Gew.%

Zunächst wurden Mischungen aus dem reinen Bindemittel und Wachs untersucht. Hierzu wurden die Zusammensetzungen aus Tabelle 1 mit 200 $\mu$m Nassschichtstärke aufgezogen und getrocknet wie oben ausgeführt und die Kontaktwinkel nach 1 min Äquilibrierungszeit des Tropfens auf der Oberfläche mit Wasser und Diiodmethan, die OFE, sowie der dispersive (DA) und polare Anteil (PA) der OFE bestimmt.

Die Mengenangaben in Tabelle 1 des PE-Wachses beziehen sich auf eine wässrige Dispersion mit einem Feststoffanteil von 35 Gew.% und die des Bindemittels auf eine wässrige Dispersion mit einem Festkörperanteil von 50 Gew.%.

| Tabelle 1 | Kontaktwinkel [°] | | OFE* | DA* | PA* | DA/PA |
|---|---|---|---|---|---|---|
| | Wasser | Diiodmethan | | | | |
| Bindemittel | 90,4 | 66,5 | 28,08 | 24,85 | 3,24 | 7,67 |
| Bindemittel + 5 Gew.% Wachs | 99,6 | 48,8 | 35,10 | 34,95 | 0,15 | 233,0 |
| * Einheit [mN/m] | | | | | | |

Erkennbar ist die deutliche Zunahme des Kontaktwinkels von Wasser bei Wachszugabe.

Die folgenden Zusammensetzungen wurden hergestellt.

R13: Rezeptur II aus EP 0 546 421 (hydrophobe Fassadenfarbe mit einer PVK von ca. 80 %)

R15: Handelsübliche hydrophile Dispersionssilikatfarbe mit einer PVK von ca. 82 %

Alle Angaben in Gewichtsprozent

| Tabelle 2 | EG1 | EG2 | EG3 | EG4 | EG5 | EG6 |
|---|---|---|---|---|---|---|
| Wasser | Rest | Rest | Rest | Rest | Rest | Rest |
| Bindemittel[1] | 23 | 23 | 26 | 20,25 | 16,10 | 14,12 |
| Wachs[1] | 1,75 | 1,75 | 1,75 | 1,75 | 1,75 | 1,75 |
| $TiO_2$ | 16 | 16 | 16 | 16 | 16 | 16 |
| $CaCO_3$ | 8 | 8 | 8 | 8 | 8 | 8 |
| Schichtsilikat | 6 | 6 | 6 | 6 | 6 | 6 |
| Cristobalit | --- | --- | --- | --- | --- | --- |
| Hohlglaskugeln | 1,0 | --- | --- | --- | --- | --- |
| Additive[2] | 5,0 | 5,0 | 5,0 | 5,0 | 5,0 | 5,0 |
| PVK [ca. %] | 37,7 | 27,4 | 25 | 30 | 35 | 45 |
| Kontaktwinkel Wasser [°] | 95,3 | 83,5 | 75,8 | 89,2 | 94,5 | 99,8 |
| Kontaktwinkel Diiodmethan [°] | 58,6 | 49,4 | 43,0 | 49,8 | 61,3 | 59,5 |
| OFE[3] | 30,53 | 37,96 | 43,41 | 36,19 | 29,39 | 29,38 |
| DA[3] | 29,36 | 34,62 | 38,08 | 34,41 | 27,83 | 28,87 |
| PA[3] | 1,17 | 3,34 | 5,33 | 1,79 | 1,56 | 0,51 |
| μR (nass) | 0,09 | 0,06 | 0,07 | 0,07 | 0,08 | 0,14 |
| μR (trocken) | 0,14 | 0,13 | 0,14 | 0,12 | 0,12 | 0,16 |
| Ablaufwinkel [°] | 8 | 8 | 8 | 8 | 10 | 12 |
| rückstandsfrei | ja | ja | ja | ja | ja | ja |

| Tabelle 2 forts. | R7 | R8 | R9 | R10 | R11 | R12 | PTFE |
|---|---|---|---|---|---|---|---|
| Wasser | Rest | Rest | Rest | Rest | | | |
| Bindemittel[1] | 23,00 | 23,00 | 23,00 | 50 | | | |
| Wachs[1] | --- | 1,75 | --- | --- | | | |
| $TiO_2$ | 16 | 16 | 16 | --- | | | |
| $CaCO_3$ | 8 | --- | 8 | --- | | | |
| Schichtsilikat | 6 | --- | 6 | --- | | | |
| Cristobalit | --- | 12 | | --- | | | |
| Hohlglaskugeln | --- | --- | 1,0 | --- | | | |
| Additive[2] | 5,0 | 5,0 | 5,0 | --- | | | |
| PVK [ca. %] | 27,4 | 27,4 | 27,7 | --- | | | |
| Kontaktwinkel Wasser [°] | 82,3 | 78,1 | 79,0 | 85,7 | 122,2 | 50,1 | 93,9 |
| Kontaktwinkel Diiodmethan [°] | 65,6 | 49,3 | 65,0 | 67,9 | 85,1 | 26,6 | 69,1 |
| OFE[3] | 31,56 | 39,93 | 33,31 | 29,18 | 14,98 | 61,42 | |
| DA[3] | 25,39 | 34,64 | 25,71 | 24,03 | 14,96 | 45,92 | |
| PA[3] | 6,17 | 5,29 | 7,61 | 5,16 | 0,02 | 15,51 | |
| μR (nass) | 0,12 | 0,14 | 0,22 | 0,40 | 0,26 | 0,47 | 0,05 |
| μR (trocken) | n.m. | 0,16 | 0,45 | n.m. | n.b. | n.b. | 0,04 |
| Ablaufwinkel [°] | 22 | 10 | 26 | 24 | 27 | 29 | 15 |
| rückstandsfrei | nein | ja | nein | nein | nein | nein | nein |

n.b.    nicht bestimmt

n.m.    nicht messbar, d.h. Wert lag außerhalb des Messbereiches

[1]    Feststoffanteil

[2]    insbesondere Dispergiermittel, Verdicker, Entschäumer, Biozide

[3]    Einheit [mN/m]

EG = erfindungsgemäß, R = Referenz

Die erfindungsgemäßen Beispiele weisen einen ähnlichen Reibungskoeffizienten wie PTFE-Folie auf. Jedoch weist PTFE einen höheren Abrollwinkel auf und das Abrollen verlief im Gegensatz zu den erfindungsgemäßen Zusammensetzungen auf PTFE nicht rückstandsfrei.

**Patentansprüche**

1.    Zusammensetzung enthaltend

- ein silikonfreies Wachs (W)
- ein Bindemittel (B)
- ein oder mehrere Pigment(e) und/oder Füllstoff(e) (PF1) aufweisend eine mittlere Teilchengröße von 0,1 bis 1,0 $\mu$m in einer Gesamtmenge von 8,0 bis 55 Gew.%;
- ein oder mehrere Pigment(e) und/oder Füllstoff(e) (PF2) aufweisend eine mittlere Teilchengröße von größer als 1,0 bis 10 $\mu$m in einer Gesamtmenge von 5,0 bis 40 Gew.%;
- ein oder mehrere Pigment(e) und/oder Füllstoff(e) (PF3) aufweisend eine mittlere Teilchengröße von größer als 10 bis 40 $\mu$m in einer Gesamtmenge von 3,0 bis 30 Gew.%;
jeweils bezogen auf den Feststoffanteil der Zusammensetzung
wobei
- PF1, PF2 und PF3 unterschiedlich sind; und
- die Zusammensetzung frei von silikonhaltigen Ölen und Wachsen ist.

2.    Die Zusammensetzung gemäß Anspruch 1, aufweisend eine Pigment-Volumen-Konzentration gemäß EN ISO 4618-1 von 15 % bis 60 %.

3.    Die Zusammensetzung gemäß einem der vorangegangenen Ansprüche, ferner enthaltend einen strukturgebenden Füllstoff.

4.    Die Zusammensetzung gemäß Anspruch 3 wobei der strukturgebende Füllstoff eine mittlere Teilchengröße von größer als 40 $\mu$m aufweist.

5.    Die Zusammensetzung gemäß Anspruch 3 oder 4 wobei der Anteil an strukturgebenden Füllstoff bezogen auf den Feststoffanteil der Zusammensetzung 0,10 bis 3,0 Gew.-% beträgt.

6.    Die Zusammensetzung gemäß einem der vorangegangenen Ansprüche, wobei die mittlere Teilchengröße von PF2 1,5 bis 50 mal größer als die mittlere Teilchengröße von PF1 ist.

7.    Die Zusammensetzung gemäß einem der vorangegangenen Ansprüche, wobei die mittlere Teilchengröße von PF3 1,5 bis 40 mal größer als die mittlere Teilchengröße von PF2 ist.

8.    Die Zusammensetzung gemäß einem der vorangegangenen Ansprüche, wobei der Gewichtsanteil von PF1 größer als der Gewichtsanteil von PF2 und/oder der Gewichtsanteil von PF2 größer als der Gewichtsanteil von PF3 ist.

9.    Die Zusammensetzung einem der vorangegangenen Ansprüche, wobei das Wachs einen statischen Anfangskontaktwinkel von Wasser nach 1 min Äquilibrieren aufweist, der größer ist als der statische Anfangskontaktwinkel von Wasser des Bindemittels nach 1 min Äquilibrieren.

**10.** Die Zusammensetzung gemäß einem der vorangegangenen Ansprüche, wobei die Zusammensetzung eine Form- oder Beschichtungsmasse ist.

**11.** Die Zusammensetzung gemäß Anspruch 11 wobei die Zusammensetzung ein Anstrichmittel oder Putz ist.

**12.** Beschichtung auf einer Substratoberfläche, die Beschichtung enthaltend

- ein silikonfreies Wachs (W)
- ein Bindemittel (B)
- ein oder mehrere Pigment(e) und/oder Füllstoff(e) (PF1) aufweisend eine mittlere Teilchengröße von 0,1 bis 1,0 $\mu$m in einer Gesamtmenge von 8,0 bis 55 Gew.%;
- ein oder mehrere Pigment(e) und/oder Füllstoff(e) (PF2) aufweisend eine mittlere Teilchengröße von größer als 1,0 bis 10 $\mu$m in einer Gesamtmenge von 5,0 bis 40 Gew.%;
- ein oder mehrere Pigment(e) und/oder Füllstoff(e) (PF3) aufweisend eine mittlere Teilchengröße von größer als 10 bis 40 $\mu$m in einer Gesamtmenge von 3,0 bis 30 Gew.%;
jeweils bezogen auf den Feststoffanteil der Zusammensetzung
wobei
- PF1, PF2 und PF3 unterschiedlich sind; und
- die Zusammensetzung frei von silikonhaltigen Ölen und Wachsen ist.

**13.** Verwendung einer Zusammensetzung nach einem der Ansprüche 1 bis 10 als Form- oder Beschichtungsmasse.

**14.** Verwendung nach Anspruch 14 wobei die Form- oder Beschichtungsmasse ein Anstrichmittel oder Putz ist.

**15.** Zusammensetzung enthaltend

- ein silikonfreies Wachs (W)
- ein Bindemittel (B)
- Pigmente und Füllstoffe,
wobei die Zusammensetzung frei von fluorhaltigen Polymeren ist und einen Nass-Reibungskoeffizienten von nicht mehr als 0,20 aufweist.

**Europäisches Patentamt**
**European Patent Office**
**Office européen des brevets**

# EUROPÄISCHER RECHERCHENBERICHT

Nummer der Anmeldung

EP 20 15 8528

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 080 791 A1 (MURJAHN AMPHIBOLIN WERKE [DE]) 22. Juli 2009 (2009-07-22) * Absätze [0012] - [0028] * ----- | 1-15 | INV. C04B26/06 |
| X | CN 102 086 328 A (DONGMEI QI) 8. Juni 2011 (2011-06-08) | 15 | |
| A | * das ganze Dokument * ----- | 1-14 | |
| X | WO 00/39049 A1 (ISPO GMBH [DE]; BORN ANDREA [DE]; WINK REINHARDT [DE]; ERMUTH JOSEF [D] 6. Juli 2000 (2000-07-06) | 15 | |
| A | * das ganze Dokument * ----- | 1-14 | |
| X | WO 2011/133487 A1 (MOORE BENJAMIN & CO [US]; YANG YONG [US]; LIBERO VINCENT R [US]; SHAVE) 27. Oktober 2011 (2011-10-27) | 15 | |
| A | * das ganze Dokument * ----- | 1-14 | |

**RECHERCHIERTE SACHGEBIETE (IPC)**

C04B

Der vorliegende Recherchenbericht wurde für alle Patentansprüche erstellt

| Recherchenort | Abschlußdatum der Recherche | Prüfer |
|---|---|---|
| München | 8. Juni 2020 | Gattinger, Irene |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 15 8528

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-06-2020

| Im Recherchenbericht angeführtes Patentdokument | Datum der Veröffentlichung | Mitglied(er) der Patentfamilie | Datum der Veröffentlichung |
|---|---|---|---|
| EP 2080791 A1 | 22-07-2009 | DE 102008004844 A1<br>EP 2080791 A1<br>ES 2422258 T3<br>GE P20115149 B<br>PL 2080791 T3<br>RU 2009101270 A | 23-07-2009<br>22-07-2009<br>10-09-2013<br>25-01-2011<br>31-12-2013<br>27-07-2010 |
| CN 102086328 A | 08-06-2011 | KEINE | |
| WO 0039049 A1 | 06-07-2000 | AT 252524 T<br>AU 2533200 A<br>CZ 20012181 A3<br>DE 29923249 U1<br>DE 29923250 U1<br>DK 1144332 T3<br>EP 1144332 A1<br>ES 2211223 T3<br>HU 0104683 A2<br>PL 348459 A1<br>PT 1144332 E<br>SK 8852001 A3<br>US 6919398 B1<br>WO 0039049 A1 | 15-11-2003<br>31-07-2000<br>17-07-2002<br>07-09-2000<br>31-08-2000<br>23-02-2004<br>17-10-2001<br>01-07-2004<br>28-11-2002<br>20-05-2002<br>31-03-2004<br>05-02-2002<br>19-07-2005<br>06-07-2000 |
| WO 2011133487 A1 | 27-10-2011 | CA 2796377 A1<br>US 2013079456 A1<br>WO 2011133487 A1 | 27-10-2011<br>28-03-2013<br>27-10-2011 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0546421 A